# EUROPÄISCHE PATENTSCHRIFT

(11) **EP 1 363 049 B1**
(45) Veröffentlichungstag und Bekanntmachung des Hinweises auf die Patenterteilung: **09.04.2008**
(21) Anmeldenummer: 03010679.3
(22) Anmeldetag: 13.05.2003
(51) Int. Cl.: F16H 61/36, F16H 59/04

(54) **Seilzugschaltung**
SHIFTING DEVICE WITH CABLE
DISPOSITIF DE CHANGEMENT DE VITESSE AVEC CABLE

(30) Priorität: 14.05.2002 DE 10221520
(43) Veröffentlichungstag der Anmeldung: 19.11.2003
(73) Patentinhaber: ZF Lemförder Metallwaren AG, 49448 Lemförde (DE)
(72) Erfinder: Weifels, Carsten, 49453 Berver (DE)

(56) Entgegenhaltungen:
- EP-A- 0 565 400
- DE-A1- 4 128 161
- DE-A1- 19 544 837

## Beschreibung

Die Erfindung betrifft eine Schaltungsvorrichtung für ein, über einen Seilzug zu schaltendes, Getriebe eines Kraftfahrzeuges gemäß dem Oberbegriff des Anspruches 1.

Eine ähnliche Schaltvorrichtung ist aus der Deutschen Patentanmeldung DE 41 28 161 A1 bekannt. Diese Schrift offenbart eine Seilzugschaltvorrichtung für ein Kraftfahrzeuggetriebe, wobei der Schalthebel über eine erste und eine zweite Achse, die zueinander senkrecht angeordnet sind, gelagert ist und Kopplungsvorrichtungen aufweist, die die Bewegung des Schalthebels an zwei Seilzüge übertragen. Bei dieser Ausführung ist ein erstes Verbindungselement direkt am Gehäuse um die erste Achse schwenkbar gelagert, während das zweite Verbindungselement im ersten Verbindungselement gelagert ist.

Bei dieser manuellen Seilzugschaltung wird die Schaltbewegung direkt über die Schaltstange und die Wählbewegung über einen Umlenkhebel in den jeweiligen Seilzug eingeleitet. Eine Bewegung des Schalthebels um die Wählachse soll hierbei im wesentlichen eine Längsverschiebung des einen Seilzuges und eine Schwenkbewegung des Schalthebels um die Schaltachse im wesentlichen eine Längsverschiebung des anderen Seilzuges bewirken. Jedoch sind die Bewegungen leider nicht vollständig voneinander entkoppelt, so dass bei einer Bewegung des Schalthebels um die eine Achse eine seitliche Verschiebung des, für die andere Achse zuständigen Seilzuges bewirkt wird. Zum einen belasten diese seitlichen Verschiebungen die Lagerung des Seilzuges zusätzlich, insbesondere an der Stelle, an der die Seele in die Ummantelung eingeführt wird und führen zu einem erhöhten Verschleiß. Zum anderen führen Kopplungen der Bewegungen in den unterschiedlichen Achsen zu einer unexakten Schaltsituation. Diese Probleme sind teilweise im Stand der Technik, beispielsweise durch aufwendige Kinematiken der Schaltung oder aufwendige Umlenkungen, behoben, jedoch ging dies bisher mit erheblichem baulichen Aufwand einher, wodurch entsprechend hohe Produktionskosten anfielen.

Es ist daher Aufgabe der Erfindung eine einfach aufgebaute Schaltvorrichtung für ein über einen Seilzug zu schaltendes Getriebe eines Kraftfahrzeuges zu finden, welche eine vollständige Entkopplung zwischen den Bewegungen des Schalthebels um die Wählachse und die Schaltachse bewirkt, so dass einerseits unnötige seitliche Belastungen am Seilzug vermieden werden und vornehmlich eine Entkopplung der Bewegungen des Schalthebels in der Schaltachse und der Wählachse erreicht werden soll. Dokument DE 195 44 837 A offenbart eine ähnliche Schaltvorrichtung, die die Merkmale des Oberbegriffes des Anspruchs 1 zeigt.

Diese Aufgabe der Erfindung wird durch die Merkmale des Patentanspruches 1 gelöst. Besondere Ausbildungen der Erfindung sind in den Unteransprüchen angegeben.

Erfindungsgemäß ist es möglich, die Bewegungskopplung zwischen der Schaltachse und der Wählachse bei einem um zwei Achsen gelagerten Schalthebel zu vermeiden, indem eine dritte Achse eingefügt wird, die den Schalthebel selbst nochmals drehbar lagert, wobei diese weitere Achse bevorzugt mit der Wähl- oder Schaltachse koaxial verläuft. Realisiert werden kann dies beispielsweise durch eine Seilzugschaltung mit einem schwenkbar gelagerten Schalthebel, zwei Verbindungselementen, welche je um eine Achse schwenkbar gelagert sind, wobei die Achsen zueinander einen rechten Winkel bilden und die Lagerungen der Verbindungselemente ortsfest im Gehäuse oder Rahmen angeordnet sind, und zwei Kopplungsvorrichtungen, die je einen Seilzug zur Übertragung von Wähl- und Schaltbewegungen des Schalthebels anbinden, wobei eines der Verbindungselemente eine Drehachse für den Schalthebel aufweist, welche parallel zur Achse des anderen Verbindungselementes verläuft, und das andere Verbindungselement eine senkrecht zur Drehachse verlaufende Gleitverbindung zum Schalthebel aufweist.

Entsprechend diesem Grundgedanken schlägt der Erfinder vor, die an sich bekannte Schaltungsvorrichtung für ein über einen Seilzug zu schaltendes Getriebe eines Kraftfahrzeuges zu verbessern, wobei diese bekannte Schaltvorrichtung ein Gehäuse oder einen Rahmen, in dem die Schaltvorrichtung gelagert ist, und einen schwenkbar gelagerten Schalthebel aufweist. Weiterhin verfügt die Schaltungsvorrichtung über ein erstes Verbindungselement, welches um eine erste Achse, und ein zweites Verbindungselement, welches um eine zweite Achse, schwenkbar gelagert ist, wobei die Achsen zueinander einen rechten Winkel bilden und die Lagerung mindestens eines der Verbindungselemente ortsfest im Gehäuse oder Rahmen angeordnet ist. Außerdem ist eine erste, mit dem ersten Verbindungselement verbundene, Kopplungsvorrichtung, die einen ersten Seilzug zur Übertragung von Wählbewegungen des Schalthebels anbindet und eine zweite, mit dem zweiten Verbindungselement verbundenen, Kopplungsvorrichtung, die einen zweiten Seilzug zur Übertragung von Schaltbewegungen des Schalthebels anbindet, bekannt. Diese bekannte Schaltvorrichtung wird erfindungsgemäß dahingehend verbessert, dass die Lagerungen beider Verbindungselemente ortsfest im Gehäuse oder Rahmen angeordnet sind, eines der Verbindungselemente eine Lagerung mit einer Drehachse für den Schalthebel aufweist, die parallel zur Achse des anderen Verbindungselementes verläuft, und das andere Verbindungselement über eine senkrecht zur Drehachse verlaufende Gleitverbindung zum Schalthebel verfügt.

Diese erfindungsgemäße Ausführung der Schaltvorrichtung, in welcher der Schalthebel insgesamt in drei Achsen gelagert ist, wobei zwei dieser Achsen parallel zueinander angeordnet sind, ermöglicht es nun, dass der Schalthebel Wählbewegungen ausführen kann, ohne dass Bewegungskomponenten auf den für die Schaltbewegungen zuständigen Seilzug übertragen werden. Entsprechend können auch Schaltbewegungen durch den Schalthebel ausgeführt werden, ohne dass einerseits der für die Wählbewegung zuständige Seilzug seitliche Belastungen erfährt und andererseits eine vollständige Entkopplung zwischen den Bewegungen des Schalthebels in den beiden Achsen erreicht wird. Somit führt eine Bewegung des Schalthebels um die eine Achse auch ausschließlich zu einer Übertragung auf die eine Kopplungsvorrichtung und eine Bewegung des Schalthebels um die andere Achse auch ausschließlich zu einer Übertragung auf die andere Kopplungsvorrichtung, wobei wechselseitige Einflüsse ausbleiben.

Bevorzugt werden die erste Achse und die zweite Achse so angeordnet, dass sie auf einer gemeinsamen Ebene liegen und sich dementsprechend in einem gemeinsamen Punkt schneiden. Außerdem kann es vorteilhaft sein, die Drehachse und die zweite Achse koaxial zueinander anzuordnen.

Liegen sowohl die erste als auch die zweite Achse auf einer gemeinsamen Ebene und ist die Drehachse koaxial zur zweiten Achse angeordnet, so bewegt sich der Schalthebel sowohl bei seiner Wählbewegung als auch bei seiner Schaltbewegung um einen gemeinsamen Mittelpunkt.

Des weiteren kann die Gleitverbindung zwischen dem ersten und dem zweiten Verbindungselement darin bestehen, dass eine Aussparung in einem Verbindungselement und ein darin eingreifendes Gleitelement, das mit dem Schalthebel verbunden ist, vorgesehen ist.

Allerdings ist auch die umgekehrte Variante möglich, indem das Gleitelement, welches mit dem Schalthebel verbunden ist, das Verbindungselement zumindest teilweise umfasst. Hiermit können ebenfalls die Bewegung des Schalthebels um die eine Achse auf das Verbindungselement übertragen werden, während Bewegungen senkrecht hierzu dieses Verbindungselement nicht bewegen.

Vorteilhaft hierfür ist es auch, wenn das Verbindungselement zumindest im Bereich der Gleitverbindung eine kreisförmige Kontur aufweist, deren Mittelpunkt auf der Achse des anderen Verbindungselementes liegt. Ein zusätzlicher Vorteil besteht in der sich hieraus ergebenden Bauraumeinsparung.

Des weiteren kann das Verbindungselement, welches die Lagerung des Schalthebels trägt, eine Aussparung aufweisen, in welcher der Schalthebel um die Drehachse verschwenkt werden kann. Hierdurch kann einerseits die notwendige Bewegungsfreiheit des Schalthebels um die Drehachse zur Verfügung gestellt werden, andererseits aber auch eine Begrenzung dieser Bewegung durch ein Anschlagen des Schalthebels am Ende der Aussparung erreicht werden.

Die Lagerung der Verbindungselemente kann einerseits darin bestehen, das ein Verbindungselement oder beide Verbindungselemente einseitig fliegend gelagert werden. Andererseits kann auch ein Verbindungselement oder können beide Verbindungselemente über je zwei endseitige Lagerstellen verfügen, die beide mit dem Gehäuse verbunden sind. Hierdurch können die Verbindungselemente bei gleicher Stabilität wesentlich filigraner ausgeführt werden, als bei einer fliegenden Lagerung.

Des weiteren kann das erste beziehungsweise das zweite Kopplungselement starr mit dem jeweils dazugehörigen Verbindungselement verbunden sein, wobei sich vorzugsweise das Kopplungselement senkrecht zur Drehachse des jeweiligen Kopplungselementes erstreckt.

In einer besonderen Ausführung können die Kopplungselemente Verbindungszapfen als Krafteinleitungspunkte für die jeweiligen Seilzüge aufweisen, wobei diese in einer Mittelstellung des Schalthebels in der Ebene liegen, die durch die erste Achse und die zweite Achse gebildet wird.

Vorteilhaft ist bei diesen erfindungsgemäßen Ausführungen einer Seilzugschaltvorrichtung also, dass die Bewegungen der beiden Seilzüge, die die Wählbewegung beziehungsweise die Schaltbewegung übertragen sollen, aufgrund der dreifachen Lagerung des Schalthebels mit zwei rahmenfesten Lagerungen vollständig voneinander entkoppelt sind, wodurch auch die Lagerstellen der Seilzüge - abgesehen von der geringen Auslenkung, bedingt durch die kreisförmige Bewegung der Kopplungselemente - nur in Längsrichtung belastet werden. Da die Schalt- und Wählbewegungen direkt in die Seilzüge eingeleitet werden, ohne eine weitere Umlenkung zu benutzen, wird auch eine besonders kompakte Ausführung der erfindungsgemäßen Schaltvorrichtung möglich. Die Einleitung der Schalt- und Wählbewegung ist, im Gegensatz zu herkömmlichen Systemen, die eine Einleitung von nur ca. 90° beziehungsweise durch Umlenksysteme unter frei wählbarem Winkel zu einer der Achsen erlauben, möglich. Im übrigen zeichnet sich eine solche erfindungsgemäße Schaltvorrichtung durch einen besonders geringen Verschleiß und geringe Reibung bei der Übertragung der Kräfte aus.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen. Es zeigen:
- Figur 1:: 3-D-Ansicht der erfindungsgemäßen Schaltvorrichtung von schräg oben;
- Figur 2:: 3-D-Ansicht der erfindungsgemäßen Schaltvorrichtung von schräg unten.

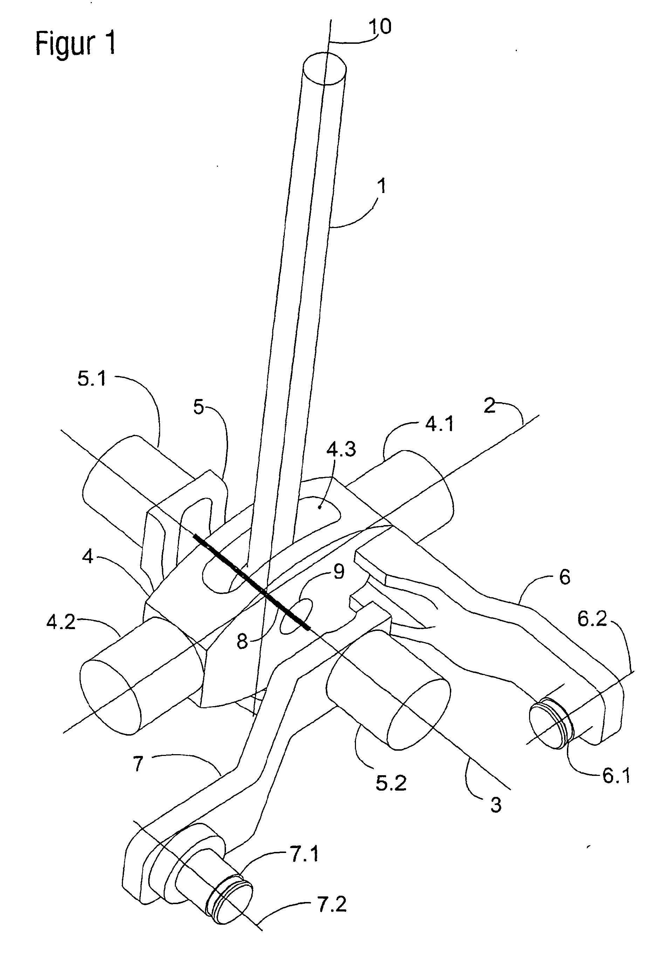

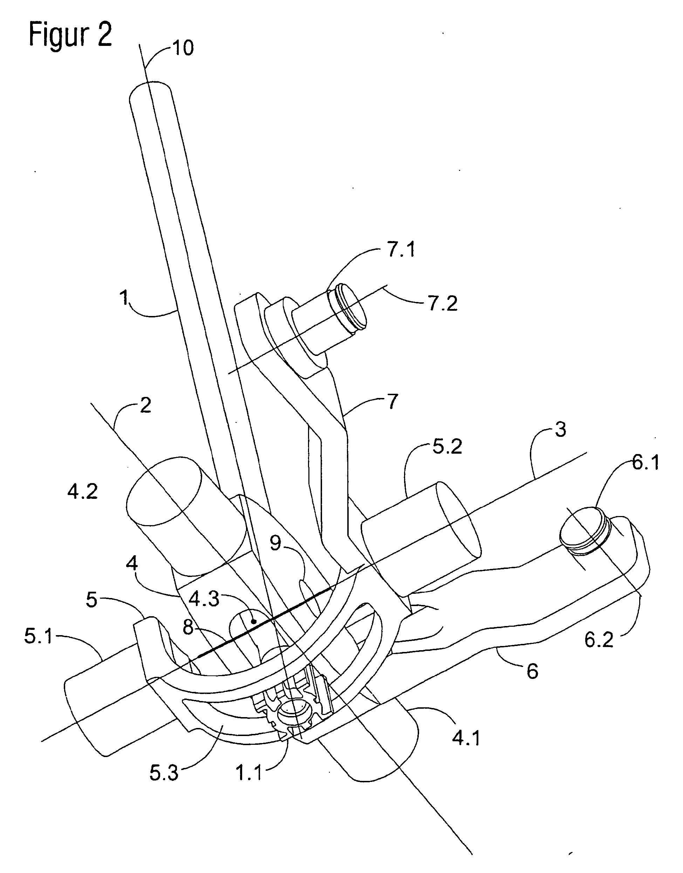

Die Figuren 1 und 2 zeigen eine erfindungsgemäße Ausführung einer Seilzugschaltung, wobei die Figur 1 eine 3D-Ansicht von schräg oben und die Figur 2 eine 3D-Ansicht von schräg unten zeigt. Aus Übersichtlichkeitsgründen wurde in der schematischen Darstellung der dazugehörige Rahmen beziehungsweise das dazugehörige Gehäuse der Schaltvorrichtung nicht dargestellt.

Die Schaltvorrichtung weist einen Schalthebel 1 auf, der durch eine Lagerung 9 verschwenkbar in einem Verbindungsstück 4 gelagert ist, wobei das Verbindungsstück 4 die beiden endseitig angeordneten Lagerungen am Rahmen, in welche die beiden Lagerzapfen 4.1 und 4.2 eingreifen, verbindet. Der Schalthebel 1 ist um die, durch die Lagerung 9 gebildete, Drehachse 8 schwenkbar innerhalb des Verbindungsstücks 4 gelagert, wobei das Verbindungsstück 4 eine Aussparung 4.3 auf der Ober- und Unterseite aufweist, durch welche der Schalthebel 1 hindurchgreift und sich so zwischen den Enden der Aussparung 4.3 über einen vorbestimmten Sektor verschwenken lässt. Ebenso lässt sich das Verbindungsstück 4 um die Schaltachse 2 verschwenken, wobei der an dem Verbindungsstück 4 angebrachte Kopplungsarm 6 für eine Kraftüberleitung der Schalthebelbewegung um die Schaltachse 2 auf einen, am Kopplungsarm 6 angreifenden, Seilzug sorgt. Der hier nicht dargestellte Seilzug wird über den Lagerzapfen 6.1 um die Lagerzapfenachse 6.2 drehbar befestigt. Die Lagerzapfenachse 6.2 verläuft hier parallel zur Schaltachse 2.

Der Schalthebel 1, der also schwenkbar um eine Drehachse 8 und die Schaltachse 2 gelagert ist, greift an seinem unteren Ende mit einem Gleitelement 1.1 in eine längliche Aussparung 5.3 des Verbindungsstückes 5 auf der Wählachse 3 ein, wobei das Verbindungsstück 5 von zwei Lagerzapfen 5.1 und 5.2 randständig begrenzt wird. Diese Lagerzapfen greifen wiederum in ortsfeste Lager im Rahmen oder Gehäuse der Schaltvorrichtung ein. Das Verbindungsstück 5 verläuft dabei außerhalb der Wählachse 3, so dass durch das Gleitelement 1.1 des Schalthebels eine Hebelkraft auf das Verbindungsstück 5 übertragen werden kann, sobald der Schalthebel 1 um seine Drehachse 8 verschwenkt wird. Im vorliegenden Beispiel ist die Drehachse 8 koaxial zur Wählachse 3 angeordnet. Außerdem liegen die Schaltachse 2, die Wählachse 3 und die koaxial hierzu verlaufende Drehachse 8 auf einer gemeinsamen Ebene und schneiden sich auch in einem gemeinsamen Punkt.

An dem Verbindungsstück 5 ist weiterhin ein Kopplungsarm 7 angebracht, welcher über einen Zapfen 7.1 die Schaltbewegungen des Schalthebels 1 um die Wählachse 3 und die Drehachse 8 auf einen daran angeschlossenen Seilzug überträgt.

Die Figur 2 verdeutlicht in ihrer Sicht von unten besonders deutlich, dass hier die Kontur des Verbindungsstückes 5 so gewählt ist, dass diese auf einem Kreisbogen über die Schaltachse 2 verläuft, so dass das Gleitelement 1.1, welches sich in einer Verlängerung des Schalthebels 1 befindet, bei einem Verschwenken des Schalthebels 1 um die Wählachse 3 gleitend durch die Aussparung 5.3 bewegen kann.

Insgesamt wird also durch die hier gezeigte erfindungsgemäße Lagerung des Schalthebels mit zwei rahmen- oder gehäusefesten Lagerungen, die senkrecht zueinander angeordnet sind und hier auf einer Ebene liegen, und der gleichzeitigen Lagerung des Schalthebels auf der gezeigten Drehachse eine sehr kompakte Bauweise einer Schaltvorrichtung möglich, welche auf nochmals drehbar gelagerte Umlenkungen der Schalt- oder Wählbewegung verzichten kann und damit auch mit einer wesentlich geringeren Anzahl von Einzelteilen auskommt. Gleichzeitig wird hier eine vollständige Entkopplung der Übertragung der Bewegungen des Schalthebels um die Schaltachse und die Wählachse bezüglich der jeweils anderen Achse erreicht.

Es ist noch darauf hinzuweisen, dass es sich bei den in der Erfindung zitierten Seilzügen bevorzugt um sogenannte "Push-Pull-Cabels" handelt, also Bowdenzüge, die sowohl Zug- als auch Druckkräfte übertragen können, jedoch liegt es auch im Rahmen der Erfindung, wenn nur zugbelastbare Seilzüge verwendet werden, wobei in diesem Fall an den Verbindungsstücken für die dann benötigten zwei Zugrichtungen auch je zwei Seile angreifen müssen, um die Bewegungen in beiden Richtungen übertragen zu können. Hierfür können je Verbindungsstück ein gemeinsamer Kopplungsarm für zwei Seile oder auch je Seil ein Kopplungsarm dienen.

Des weiteren ist auch noch darauf hinzuweisen, dass im hier dargestellten Ausführungsbeispiel auch die Schaltachse und Wählachse in ihrer Funktion vertauscht werden können.

### BEZUGSZEICHENLISTE:

- 1: Schalthebel
- 1.1: Gleitelement
- 2: Schaltachse
- 3: Wählachse
- 4: Verbindungsstück auf der Schaltachse
- 4.1: Lagerzapfen
- 4.2: Lagerzapfen
- 4.3: Aussparung
- 5: Verbindungsstück auf der Wählachse
- 5.1: Lagerzapfen
- 5.2: Lagerzapfen
- 5.3: Aussparung für Schalthebel-Gleitelement
- 6: Kopplungsarm für Schaltbewegung
- 6.1: Kopplungsarm-Lagerzapfen
- 6.2: Lagerzapfenachse
- 7: Kopplungsarm für Wählbewegungen
- 7.1: Kopplungsarm-Lagerzapfen
- 7.2: Lagerzapfenachse
- 8: Drehachse
- 9: Lagerung des Schalthebels im Verbindungsstück
- 10: Mittelachse des Schalthebels

## Patentansprüche

1. Schaltungsvorrichtung für ein über einen Seilzug zu schaltendes Getriebe eines Kraftfahrzeuges mit mindestens:
- einem Gehäuse oder einem Rahmen, in dem die Schaltvorrichtung gelagert ist,
- einem schwenkbar gelagerten Schalthebel (1),
- einem ersten Verbindungselement (4), welches um eine erste Achse (2), und einem zweiten Verbindungselement (5), welches um eine zweite Achse (3) schwenkbar gelagert ist, wobei die Achsen (2, 3) zueinander einen rechten Winkel bilden und die Lagerung mindestens eines der Verbindungselemente (4, 5) ortsfest im Gehäuse oder Rahmen angeordnet ist,
- einer ersten, mit dem ersten Verbindungselement (4) verbundenen, Kopplungsvorrichtung (6), die einen ersten Seilzug zur Übertragung von Wählbewegungen des Schalthebels (1) anbindet, und
- einer zweiten, mit dem zweiten Verbindungselement (5) verbundenen, Kopplungsvorrichtung (7), die einen zweiten Seilzug zur Übertragung von Schaltbewegungen des Schalthebels (1) anbindet, wobei
- die Lagerungen beider Verbindungselemente (4, 5) ortsfest im Gehäuse oder Rahmen angeordnet sind,
- eines der Verbindungselemente (5) eine parallel zur Drehachse (8) verlaufende Gleitverbindung (5.3, 1.1) zum Schalthebel (1) aufweist.
**dadurch gekennzeichnet, dass**
- das andere Verbindungselement (4) eine Lagerung (9) mit einer Drehachse (8) für den Schalthebel (2) aufweist, die parallel zur Achse (3) des anderen Verbindungselementes (5) verläuft.

2. Schaltvorrichtung gemäß dem voranstehenden Anspruch 1, **dadurch gekennzeichnet, dass** die erste Achse (2) und die zweite Achse (3) auf einer Ebene angeordnet sind.

3. Schaltvorrichtung gemäß einem der voranstehenden Ansprüche 1 bis 2, **dadurch gekennzeichnet, dass** die Drehachse (8) und die zweite Achse (3) koaxial angeordnet sind.

4. Schaltvorrichtung gemäß einem der voranstehenden Ansprüche 1 bis 3, **dadurch gekennzeichnet, dass** die Gleitverbindung eine Aussparung (5.3) in einem Verbindungselement (5) und ein darin eingreifendes Gleitelement (1.1) aufweist, das mit dem Schalthebel (1) verbunden ist.

5. Schaltvorrichtung gemäß einem der voranstehenden Ansprüche 1 bis 3, **dadurch gekennzeichnet, dass** die Gleitverbindung ein Gleitelement (1.1) aufweist, das mit dem Schalthebel (1) verbunden ist und gleichzeitig ein Verbindungselement (5) zumindest teilweise umfasst.

6. Schaltvorrichtung gemäß einem der voranstehenden Ansprüche 4 bis 5, **dadurch gekennzeichnet, dass** das Verbindungselement (5) zumindest im Bereich der Gleitverbindung eine kreisförmige Kontur aufweist, deren Kreismittelpunkt auf der Achse (2) des anderen Verbindungselementes (4) liegt.

7. Schaltvorrichtung gemäß einem der voranstehenden Ansprüche 1 bis 6, **dadurch gekennzeichnet, dass** das Verbindungselement (4), welches die Lagerung (9) des Schalthebels (1) trägt, eine Aussparung (4.3) aufweist, in welcher der Schalthebel (1) um die Drehachse (8) verschwenkt werden kann.

8. Schaltvorrichtung gemäß einem der voranstehenden Ansprüche 1 bis 7, **dadurch gekennzeichnet, dass** das erste Verbindungselement (4) über zwei Lagerstellen (4.1, 4.2) verfügt, zwischen denen sich der Schalthebel befindet.

9. Schaltvorrichtung gemäß einem der voranstehenden Ansprüche 1 bis 8, **dadurch gekennzeichnet, dass** das zweite Verbindungselement (5) über zwei Lagerstellen (5.1, 5.2) verfügt, zwischen denen sich der Schalthebel (1) befindet.

10. Schaltvorrichtung gemäß einem der voranstehenden Ansprüche 1 bis 9, **dadurch gekennzeichnet, dass** das erste Kopplungselement (6) starr mit dem ersten Verbindungselement (4) verbunden ist und sich vorzugsweise senkrecht zur ersten Achse (2) erstreckt.

11. Schaltvorrichtung gemäß einem der voranstehenden Ansprüche 1 bis 10, **dadurch gekennzeichnet, dass** das zweite Kopplungselement (7) starr mit dem zweiten Verbindungselement (5) verbunden ist und sich vorzugsweise senkrecht zur zweiten Achse (3) erstreckt.

12. Schaltvorrichtung gemäß einem der voranstehenden Ansprüche 2 bis 11, **dadurch gekennzeichnet, dass** die Kopplungselemente (6, 7) Verbindungszapfen (6.1, 7.1) als Krafteinleitungspunkte für die jeweiligen Seilzüge aufweisen und die Lagerzapfenachsen (6.2, 7.2) der Verbindungszapfen (6.1, 7.1) in einer Mittelstellung des Schalthebels (1) in der Ebene liegen, die durch die erste Achse (2) und die zweite Achse (3) gebildet wird.

## Claims

1. Shift mechanism for an automotive gearshift designed to be shifted by means of a control cable, with at least:
- a housing or a frame, in which the shift mechanism is mounted,
- a pivotably mounted shift lever (1),
- a first connecting element (4) mounted so as to pivot about a first axis (2) and a second connecting element (5) mounted so as to pivot about a second axis (3), which axes (2, 3) mutually subtend a right angle, and the bearing of at least one of the connecting elements (4, 5) is disposed so as to be stationary in the housing or frame,
- a first coupling mechanism (6) connected to the first connecting element (4) attached to a first control cable for transmitting selection movements of the shift lever (1), and
- a second coupling mechanism (7) connected to the second connecting element (5) attached to a second control cable for transmitting shifting movements of the shift lever (1), and
- the bearings of the two connecting elements (4, 5) are disposed so as to be stationary in the housing or frame,
- one of the connecting elements (5) has a sliding connection (5.3, 1.1) to the shift lever (1) extending parallel with the axis of rotation (8),
**characterised in that**
the other connecting element (4) has a bearing (9) with an axis of rotation (8) for the shift lever (2) which extends parallel with the axis (3) of the other connecting element (5).

2. Shift mechanism as claimed in preceding claim 1, **characterised in that** the first axis (2) and the second axis (3) are disposed in one plane.

3. Shift mechanism as claimed in one of preceding claims 1 to 2, **characterised in that** the axis of rotation (8) and the second axis (3) are coaxially disposed.

4. Shift mechanism as claimed in one of preceding claims 1 to 3, **characterised in that** the sliding connection has a cut-out (5.3) in a connecting element (5) and a sliding element (1.1) locating therein, which is connected to the shift lever (1).

5. Shift mechanism as claimed in one of preceding claims 1 to 3, **characterised in that** the sliding connection has a sliding element (1.1) which is connected to the shift lever (1) and simultaneously at least partially comprises a connecting element (5).

6. Shift mechanism as claimed in one of preceding claims 4 to 5, **characterised in that** the connecting element (5) has a circular contour at least in the region of the sliding connection, the circle centre point of which lies on the axis (2) of the other connecting element (4).

7. Shift mechanism as claimed in one of preceding claims 1 to 6, **characterised in that** the connecting element (4), which supports the bearing (9) of the shift lever (1), has a cut-out (4.3) in which the shift lever (1) can be pivoted about the axis of rotation (8).

8. Shift mechanism as claimed in one of preceding claims 1 to 7, **characterised in that** the first connecting element (4) has two bearing points (4.1, 4.2), between which the shift lever is disposed.

9. Shift mechanism as claimed in one of preceding claims 1 to 8, **characterised in that** the second connecting element (5) has two bearing points (5.1, 5.2), between which the shift lever (1) is disposed.

10. Shift mechanism as claimed in one of preceding claims 1 to 9, **characterised in that** the first coupling element (6) is rigidly connected to the first connecting element (4) and preferably extends perpendicular to the first axis (2).

11. Shift mechanism as claimed in one of preceding claims 1 to 10, **characterised in that** the second coupling element (7) is rigidly connected to the second connecting element (5) and preferably extends perpendicular to the second axis (3).

12. Shift mechanism as claimed in one of preceding claims 2 to 11, **characterised in that** the coupling elements (6, 7) have connecting pins (6.1, 7.1) serving as points for introducing force to the respective control cables, and the bearing pin axes (6.2, 7.2) of the connecting pins (6.1, 7.1) lie in a centre position of the shift lever (1) in a plane formed by the first axis (2) and the second axis (3).

## Revendications

1. Dispositif de changement de vitesse pour une transmission, à commander par un câble de traction, d'un véhicule automobile, avec au moins :
- un boîtier ou un cadre dans lequel est monté le dispositif de changement de vitesse,
- un levier de changement de vitesse (1) monté pivotant,
- un premier élément de liaison (4) qui est monté pivotant autour d'un premier axe (2), et un second élément de liaison (5) qui est monté pivotant autour d'un deuxième axe (3), les axes (2, 3) formant entre eux un angle droit et le support d'au moins l'un des éléments de liaison (4, 5) étant disposé de manière fixe dans le boîtier ou le cadre,
- un premier dispositif d'accouplement (6) relié au premier élément de liaison (4) et qui relie un premier câble de traction pour la transmission des mouvements de sélection du levier de changement de vitesse (1),
et
- un deuxième dispositif d'accouplement (7) relié au deuxième élément de liaison (5) et qui relie un deuxième câble de traction pour la transmission de mouvements de commutation du levier de changement de vitesses (1), dans lequel
- les supports des deux éléments de liaison (4, 5) sont disposés de manière fixe dans le boîtier ou sur le cadre,
- l'un des éléments de liaison (5) présente une liaison à glissement (5.3, 1.1) avec le levier de changement de vitesse (1), laquelle s'étend parallèlement à l'axe de rotation (8),
**caractérisé en ce que**
- l'autre élément de liaison (4) comporte un support (9) avec un axe de rotation (8) pour le levier de changement de vitesse (2), lequel s'étend parallèlement à l'axe (3) de l'autre élément de liaison (5).

2. Dispositif de changement de vitesse selon la revendication 1 précédente, **caractérisé en ce que** le premier axe (2) et le second axe (3) sont disposés sur un plan.

3. Dispositif de changement de vitesse selon l'une quelconque des revendications 1 ou 2, **caractérisé en ce que** l'axe de rotation (8) et le second axe (3) sont disposés coaxialement.

4. Dispositif de changement de vitesse selon l'une quelconque des revendications 1 à 3, **caractérisé en ce que** la liaison à glissement présente une découpe (5.3) dans un élément de liaison (5) et un élément de glissement (1.1) s'engageant dans celle-ci, lequel est relié au levier de changement de vitesse (1).

5. Dispositif de changement de vitesse selon l'une quelconque des revendications 1 à 3, **caractérisé en ce que** la liaison à glissement comporte un élément de glissement (1.1) qui est relié au levier de changement de vitesse (1) et qui comprend en même temps au moins en partie un élément de liaison (5).

6. Dispositif de changement de vitesse selon l'une quelconque des revendications 4 ou 5, **caractérisé en ce que** l'élément de liaison (5) présente, au moins dans la zone de la liaison à glissement, un contour de forme circulaire dont le centre du cercle se situe sur l'axe (2) de l'autre élément de liaison (4).

7. Dispositif de changement de vitesse selon l'une quelconque des revendications 1 à 6, **caractérisé en ce que** l'élément de liaison (4), qui porte le support (9) du levier de changement de vitesse (1), présente une découpe (4.3) dans laquelle le levier de changement de vitesse (1) peut pivoter autour de l'axe de rotation (8).

8. Dispositif de changement de vitesse selon l'une quelconque des revendications 1 à 7, **caractérisé en ce que** le premier élément de liaison (4) possède deux points d'appui (4.1, 4.2) entre lesquels se trouve le levier de changement de vitesse.

9. Dispositif de changement de vitesse selon l'une quelconque des revendications 1 à 8, **caractérisé en ce que** le second élément de liaison (5) possède deux points d'appui (5.1, 5.2) entre lesquels se trouve le levier de changement de vitesse (1).

10. Dispositif de changement de vitesse selon l'une quelconque des revendications 1 à 9, **caractérisé en ce que** le premier élément d'accouplement (6) est relié rigidement au premier élément de liaison (4) et s'étend de préférence perpendiculairement au premier axe (2).

11. Dispositif de changement de vitesse selon l'une quelconque des revendications 1 à 10, **caractérisé en ce que** le second élément d'accouplement (7) est relié rigidement au second élément de liaison (5) et s'étend de préférence perpendiculairement au second axe (3).

12. Dispositif de changement de vitesse selon l'une quelconque des revendications 2 à 11, **caractérisé en ce que** les éléments d'accouplement (6, 7) comportent des tenons de liaison (6.1, 7.1) servant de points d'introduction des forces pour les câbles de traction respectifs, et les axes (6.2, 7.2) des pivots des tenons de liaison (6.1, 7.1) se situent, dans une position centrale du levier de changement de vitesse (1), dans un plan qui est formé par le premier axe (2) et le second axe (3).
